# EUROPEAN PATENT SPECIFICATION

(11) **EP 3 613 277 B1**
(45) Date of publication and mention of the grant of the patent: **18.11.2020**
(21) Application number: 19192750.8
(22) Date of filing: 21.08.2019
(51) Int. Cl.: A01G 23/089, B26D 1/00, B26D 1/30, B26D 5/12

(54) **A CUTTING HEAD FOR AN EXCAVATOR OR A FORESTRY MACHINE**
SCHNEIDKOPF FÜR EINEN BAGGER ODER EINE FORSTMASCHINE
TÊTE DE COUPE POUR EXCAVATEUR OU MACHINE FORESTIÈRE

(30) Priority: 24.08.2018 SI 201800190
(43) Date of publication of application: 26.02.2020
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(56) References cited:
- EP-A1- 1 510 303
- EP-A1- 3 085 224
- DE-U1-202009 017 940
- US-A1- 2014 157 607

## Description

### Field of the invention

The present invention belongs to the field of forestry and working machines for deforestation or reduction of trees and bushes on lake and river shores, more precisely to the field of blades and cutting heads to be installed on an excavator or a forestry machine.

### The technical problem

Cutting grabs installed on excavators or forestry machines are increasingly used for cutting trees and/or bushes during deforestation and cleaning of various spaces such as lake and river shores. The advantage of cutting grabs is in that trees can be cut in their lowest part, so that only roots remain to be removed. Such machines are suitable for cutting trees and bushes and can be manufactured in different sizes, so that a suitable size can be selected based on the area to be cleaned.

The problem occurring during use of cutting grabs is that large forces act on their blade; therefore the latter can bend and deform. The damage to the blade can advance with further use, which leads to hampered performance of the machine. The technical problem solved by the present invention is thus a constructional design of a cutting head for an excavator or a forestry machine, which will prevent or limit said damage to the blade, but will still allow fast and efficient cutting of trees and/or bushes.

### State of the art

The company WESTTECH produces Woodcracker cutting grabs for excavators and forestry machines, wherein the cutting had has a bottom part with a gripping element, which is composed of a fixed gripping part in the shape of a lying letter Y and a movable gripping part in the shape of a lying letter C. One part of the C-shaped movable part is rotatably mounted in the bottom part of the Y-shaped part. The latter has a serrated mouth in its inner part, to which the blade installed in the inner part of the C-shaped part is approaching during cutting. The circular part of the blade is mounted into the C-shaped part with screws, while the cutting part is straight and has a wedge shape along its entire cutting length.

Smaller cutting grabs Woodcracker produced by the company WESTTECH have a blade mounted onto the fixed part of the gripping element, the blade being circular in the part near the rotatably mounted movable part. The blade is wedge shaped along its straight part.

Slovenian company Uniforest produces excavator grabs comprising a gripping part in the upper part of the grabs for gripping a tree or a plurality of smaller trees and a single blade in the bottom part of the grabs, which rotates from its housing and cuts the tree upon gripping with the gripping part.

Cutting grabs of the Italian company TREVI BENNE have gripping branches in the upper part and a cutting part in the lower part of the grabs. The cutting part has a fixed branch and a movable branch, which is equipped with a blade in a semi-circular shape with grooves in the outer part of the blade. The grooves are provided near the outer edge of the blade.

All above described solutions differ from the present invention, as they only have one blade, which is subject to large forces due to which the possibility of deformation and malfunction is higher.

Another state of the art document is known from EP 3 085 224 A1.

### Description of the solution of the technical problem

The essence of the cutting head (cutting grabs) according to the invention is in that it comprises two blades, mounted into lower part of a gripping-cutting branches, wherein the cutting edges of the blades are wedge-shaped and located in the same plane, so that upon cutting a tree/bush or a plurality of trees/bushes can be cut in one plane. Both blades are symmetrically shaped and have on their edges grooves of any geometrical shape, preferably semi-circular shape, the number of the grooves being arbitrary. The preferred embodiment has semi-circular grooves on both sides of the blades, wherein the grooves match so that the grooves on the bottom side are located between the grooves on the upper side. The upper side preferably has an even number of grooves, while the bottom side preferably has an odd number of grooves.

The cutting head for an excavator or a forestry machines according to the invention will be described in further detail based on figures, which show:
- Figure 1: an assembly for cutting trees and bushes with the cutting head according to the invention

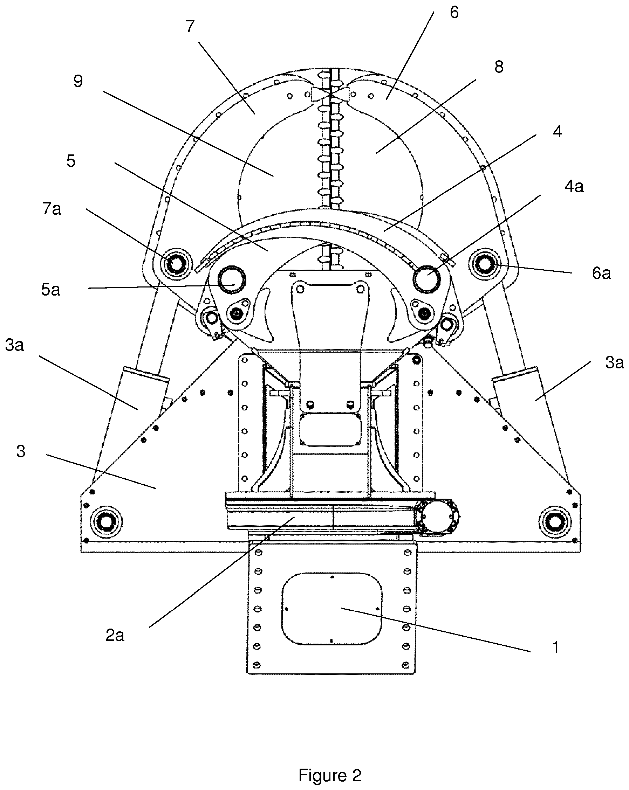

- Figure 2: plan view of the cutting head according to the invention
- Figure 3: schematic view of blade installation into the cutting head
- Figure 4: plan view of the blade according to the invention
- Figure 4a: elevation view of the blade according to the invention
- Figure 4b: side view of the blade according to the invention
- Figure 5a: edge of the blade with the detail
- Figure 5b: tip of the blade with the detail

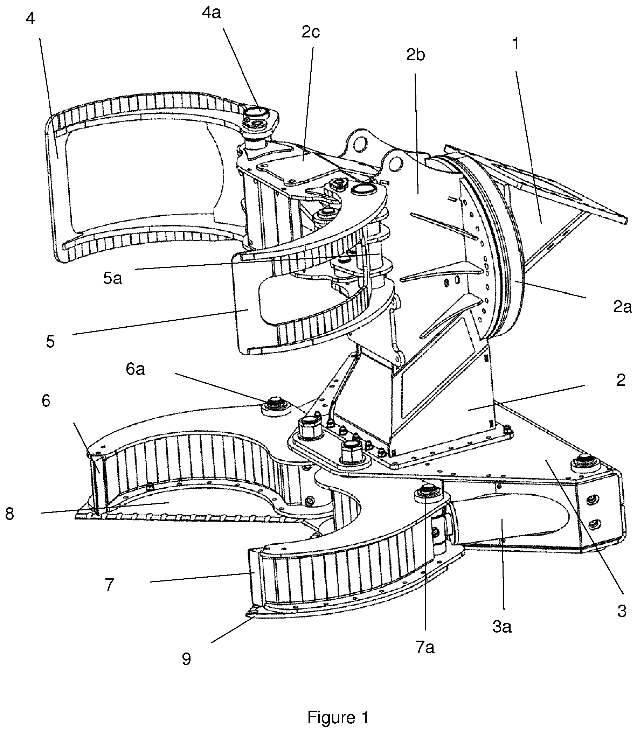

An assembly as shown in figure 1 comprises an attachable housing 1, which is via a circularly shaped attachment 1a screwed with screws onto a circularly shaped second attachment 2a of the carrier 2. Perpendicularly to the circularly shaped second attachment 2a a first frame 2b and a second frame 2c are attached, which are equipped with accessories for mounting an axle 4a for a first branch 4 and on the other side for a second axle 5a for a second branch 5. The circular attachment 2a allows a 360° rotation of the whole assembly. The carrier 2 is attached to a base 3 with approximately triangular horizontal and parallel sides with two hydraulic cylinders 3a, which are installed in vertical axes 6a and 7a. Said hydraulic cylinders 3a are arranged to open and close third and fourth branches 6 and 7, which are provided with blades 8 and 9. The attachable housing 1 can be installed onto a working machine or an excavator or a forestry machine.

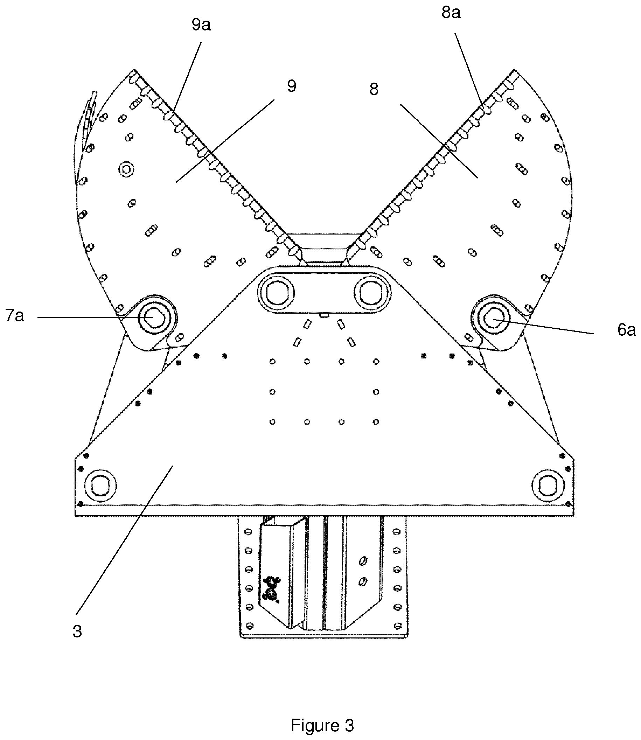

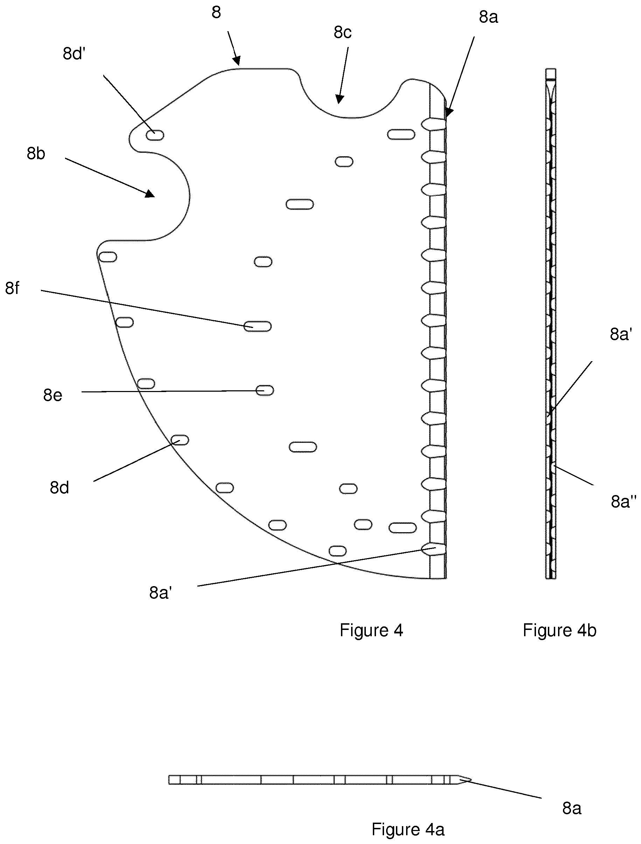

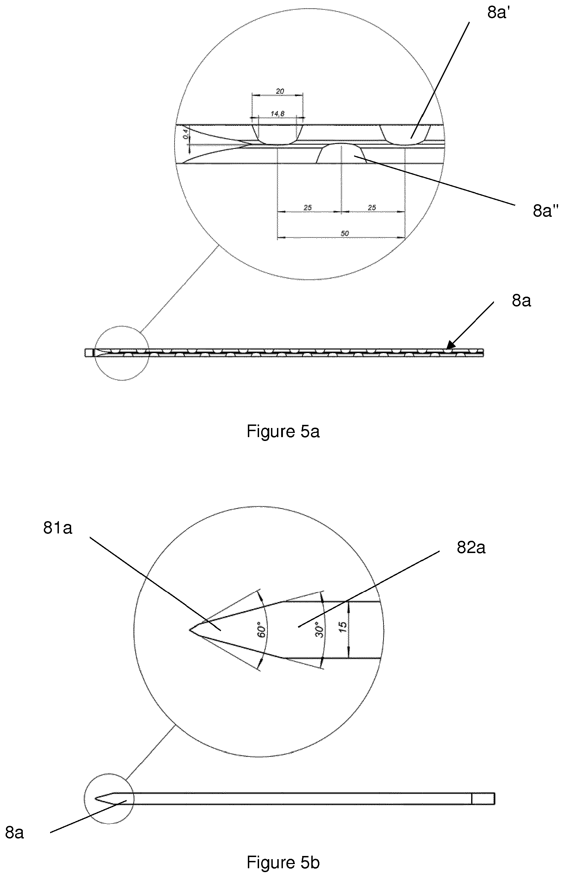

As shown in figure 3, the base 3 is provided with the third branch 6 with the first blade 8 and the fourth branch 8 with the second blade 9. The first blade 8 is a mirror image of the second blade 9. During operation the edges 8a and 9a of the blades 8 and 9 cut in one plane. The blade 8 is semi-circularly shaped with two semi-circular recesses 8b and 8c. From the edge 8a seven oval holes 8d are distributed along the outer circumference. Between the recess 8b and transition to the second recess 8c is an oval hole 8d', having the same shape as holes 8d. Between the outer edge of the blade and the edge 8a second oval holes 8e and larger oval holes 8f are provided, which alternate along the radius of the semi-circle. The oval holes are intended for mounting the blade 8 to the third branch 6 (figures 4, 4a and 4b). The same holes as for blade 8 are also provided in blade 9 for mounting onto the fourth branch 7. As shown in figure 4b the edge of the blade is wedge-shaped and has numerous grooves 8a' on the upper side of the edge. On the bottom side of the edge 8a grooves 8a" are provided. The edge 8a has in its initial part 81a a larger angle in comparison to the second part 82a, which continues into the constantly thick part 83a, where the grooves 8a' and 8a" are located. The edge 8a has in its first part 81a an angle from 50° to 70°, preferably 60°, while the second part 82a has an angle from 20° to 40°, preferably 30°. This characteristic of the edge 8a as shown in figure 5b allows easier penetration of the blade into the tree mass. The structure of the tip of the blade has a penetrating first and second part and then the grooved part, preferably with grooves on both sides of the blade, which enables distribution of the forces on the edge 8a. Thus, the inner part of the blade is relieved and its bending is prevented.

According to a possible embodiment the blade 8 has fourteen grooves 8a' on the upper part of the blade and fifteen grooves 8a" on the bottom part of the edge 8a. The width of the blade is preferably 15 mm, while the grooves 8a' and 8a" have a preferred width of 20 mm and are preferably 7.5 mm deep (figures 5a and 5b). The dimensions of the blades depend on the size of the cutting head and the machine to which it is installed. The number of grooves depends on the size of the cutting head and power of the machine to which it is installed. The number of grooves can be from 10 to 30 on the upper side of the blade and from 9 to 31 on the bottom side of the blade.

Blades 8 and 9 may be provided with grooves only on the upper or the bottom side of the blade. According to another variant, the blades may have unevenly distributed grooves on the upper and bottom part of the edge. The grooves can also be alternately semi-circular and rectangular or semi-circular and trapeze-shaped.

Blades 8 and 9 are made of materials with good slicing characteristics and are resistant to wear, while at the same time maintaining toughness needed due to large static and dynamic strains. A suitable material is steel, especially steel resistant to wear, such as material Hardox Extreme, which is extremely hard and has nominal hardness of 60 HRC (Rockwell) and typical hardness of 650-700 HBW.

Because the blades are equipped with grooves of any geometrical shape, preferably semi-circular shape, the distribution of forces during cutting is improved. Consequently, the probability of damage and deformation is lower or almost non-existent. In addition, such geometry of the blade prevents the wood from slipping outside of the branches, where the cutting force is lowest. In case of wear the blades may be sharpened, while the holes for mounting the blades into branches allow setting of the optimal distance between the blades needed for optimal performance. The blades are semi-circular, wherein the arched part has elongated cut-outs for said setting and mounting of the blades. With above described blades the technical problem is effectively solved.

The cutting head according to the invention is suitable for installation onto an excavator or a forestry machine, which allows deforestation or cutting trees and/or bushes. It can be used in combination with a gripper and/or tongs for embracing a tree and/or a bush, as a part of the assembly shown in figure 1.

## Claims

1. A cutting head for a excavator or a forestry machine for cutting trees and/or bushes, wherein the head has two blades, which are mounted in bottom parts of gripping and cutting branches, wherein the cutting edges of the blades are shaped as a wedge **characterized in that** said cutting edges of the blades are located in the same plane, so that upon a cutting movement the tree and/or a bush is cut in one plane; and **in that** both blades are symmetrical and have on at least one side of the wedge-shaped edge any number of grooves of any geometrical shape.

2. The cutting head according to claim 1, **characterized in that** the grooves are located on both sides of the wedge-shaped cutting edges of the blades, which preferably match so that the grooves on the bottom side are located between the grooves on the upper side of a respective blade.

3. The cutting head according to any of the preceding claims, **characterized in that** the upper side of each blade preferably has 10 to 30 grooves, while the bottom side preferably has from 9 to 31 grooves.

4. The cutting head according to any of the preceding claims, **characterized in that** the upper side of each blade preferably has an even number of grooves, while the bottom side of each blade preferably has an odd number of grooves.

5. The cutting head according to any of the preceding claims, **characterized in that** the grooves are semi-circular.

6. The cutting head according to any of the preceding claims, **characterized in that** the edge of each blade has two parts, the first part being sharper than the second part, which then continues into the evenly thick part with said grooves.

7. The cutting head according to claim 6, **characterized in that** the first part has an angle from 50° to 70°, preferably 60°, and the second part has an angle from 20° to 40°, preferably 30°.

8. The cutting head according to any of the preceding claims, **characterized in that** the blades are made of steel, preferably steel resistant to wear, in particular of steel with nominal hardness of 60 HRC (Rockwell) and a typical hardness of 650-700 HBW.

9. The cutting head according to any of the preceding claims, **characterized in that** the blades are semi-circular, wherein the arch has oval holes for mounting and setting of the blades to the cutting branches of the cutting head.

10. The cutting head according to claim 9, **characterized in that** the blade (8) is semi-circularly shaped with two semi-circular recesses (8b and 8c); from an edge (8a) of the blade (8) seven oval holes (8d) are provided along the outer circumference; between the first recess (8b) and transition to the second recess (8c) is a second oval hole (8d'), having the same shape as first holes (8d); between the other edge of the blade and the edge (8a) third oval holes (8e) and larger fourth oval holes (8f) are provided, which alternate along the radius of the semi-circle; the oval holes are intended for mounting the blade (8) to a third branch (6); the second blade (9) is the same as the first blade (8) and is mounted onto a fourth branch (7).

11. The cutting head according to any of the preceding claims, **characterized in that** dimensions of the blades are arbitrary, preferably the width of the blade is 15 mm and the grooves are preferably 20 mm wide and 7.5 mm deep.

12. An assembly for cutting trees and/or bushes, which comprises the cutting head according to any of the preceding claims and a gripper and/or tongs for embracing a tree and/or a bush.

13. The assembly according to claim 12, **characterized in that** it comprises an attachable housing (1), which is via a circularly shaped first attachment (1a) mounted with screws onto a circular second attachment (2a) of a carrier (2); perpendicularly to the second attachment (2a) a first frame (2b) and a second frame (2c) are attached, provided with accessories to which a first axle (4a) for a first branch (4) is installed and a second axle (5a) for a second branch (5) is installed on the other side; the circular attachment (2a) allows 360° rotation of the whole assembly; the carrier (2) is attached to a base (3) with approximately triangular and parallel sides with two hydraulic cylinders (3a), which are mounted in vertical axes (6a and 7a); the hydraulic cylinders (3a) open and close the third and fourth branches (6 and 7) with blades (8 and 9).

14. An excavator or a forestry machine with the cutting head according to any claim from 1 to 11 or the assembly according to claim 12 or claim 13.

## Patentansprüche

1. Schneidkopf für einen Bagger oder eine Forstmaschine zum Schneiden von Bäumen und/oder Büschen, wobei der Kopf zwei Messer aufweist, die in Bodenteilen von Greif- und Schneidschenkeln gelagert sind, wobei die Schneidkanten der Messer als Keil geformt sind; **dadurch gekennzeichnet, dass** die Schneidkanten der Messer auf der gleichen Ebene liegen, so dass bei einer Schneidbewegung der Baum und/oder Busch auf einer Ebene geschnitten wird; und dass beide Messer symmetrisch sind und an mindestens einer Seite der keilförmigen Kante eine beliebige Anzahl von Nuten beliebiger geometrischer Form aufweisen.

2. Schneidkopf nach Anspruch 1, **dadurch gekennzeichnet, dass** die Nuten auf beiden Seiten der keilförmigen Schneidkanten der Messer angeordnet sind, die vorzugsweise übereinstimmen, so dass sich die Nuten auf der Unterseite, zwischen den Nuten auf der Oberseite eines jeweiligen Messers befinden.

3. Schneidkopf nach einem der vorhergehenden Ansprüche, **dadurch gekennzeichnet, dass** die Oberseite jedes Messers vorzugsweise 10 bis 30 Nuten aufweist, während die Unterseite vorzugsweise 9 bis 31 Nuten aufweist.

4. Schneidkopf nach einem der vorhergehenden Ansprüche, **dadurch gekennzeichnet, dass** die Oberseite jedes Messers vorzugsweise eine gerade Anzahl von Nuten aufweist, während die Unterseite jedes Messers vorzugsweise eine ungerade Anzahl von Nuten aufweist.

5. Schneidkopf nach einem der vorhergehenden Ansprüche, **dadurch gekennzeichnet, dass** die Nuten halbkreisförmig sind.

6. Schneidkopf nach einem der vorhergehenden Ansprüche, **dadurch gekennzeichnet, dass** der Rand jedes Messers zwei Teile aufweist, wobei der erste Teil schärfer ist als der zweite Teil, der sich dann mit den Nuten in den gleichmässig dicken Teil fortsetzt.

7. Schneidkopf nach Anspruch 6, **dadurch gekennzeichnet, dass** das erste Teil einen Winkel von 50° bis 70°, vorzugsweise 60°, und das zweite Teil einen Winkel von 20° bis 40°, vorzugsweise 30°, aufweist.

8. Schneidkopf nach einem der vorhergehenden Ansprüche, **dadurch gekennzeichnet, dass** die Messer aus Stahl, vorzugsweise verschleissfestem Stahl, insbesondere aus Stahl mit einer Nennhärte von 60 HRC (Rockwell) und einer typischen Härte von 650 -700 HBW hergestellt sind.

9. Schneidkopf nach einem der vorhergehenden Ansprüche, **dadurch gekennzeichnet, dass** die Messer halbkreisförmig sind, wobei der Bogen ovale Löcher zur Montage und Einstellung der Messer an den Schneidschenkeln des Schneidkopfes aufweist.

10. Schneidkopf nach Anspruch 9, **dadurch gekennzeichnet, dass** das Messer halbkreisförmig mit zwei halbkreisförmigen Ausnehmungen (8b und 8c) ausgebildet ist; dass entlang des Aussenumfangs von einem Rand (8a) des Messers, sieben ovale Löcher (8d) vorgesehen sind, dass zwischen der ersten Aussparung (8b) und dem Übergang in die zweite Aussparung (8c) ein zweites ovales Loch (8d') mit der gleichen Form wie die ersten Löcher (8d) vorgesehen ist; zwischen dem anderen Rand des Messers und dem Rand (8a) dritte ovale Löcher (8e) und grössere vierte ovale Löcher (8f) ausgebildet sind, die sich entlang des Radius des Halbkreises abwechseln; die ovalen Löcher sind zur Befestigung des Messers (8) an einem dritten Schenkel (6) vorgesehen; das zweite Messer (9) dem ersten Messer (8) gleich ist und auf einem vierten Schenkel (7) montiert ist.

11. Schneidkopf nach einem der vorhergehenden Ansprüche, **dadurch gekennzeichnet, dass** die Abmessungen der Messer beliebig sind, die Breite des Messers vorzugsweise 15 mm beträgt und die Nuten vorzugsweise 20 mm breit und 7,5 mm tief sind.

12. Anordnung zum Schneiden von Bäumen und/oder Büschen, die den Schneidkopf nach einem der vorhergehenden Ansprüche umfasst, und einen Greifer und/oder Zange zum Umgreifen eines Baumes und/oder eines Busches.

13. Anordnung nach Anspruch 12, **dadurch gekennzeichnet, dass** sie ein aufsetzbares Gehäuse (1) umfasst, das über einen kreisförmigen ersten Aufsatz (1a), der mit Schrauben auf einem kreisförmigen zweiten Aufsatz (2a) eines Trägers (2) montiert ist; senkrecht zu dem zweiten Aufsatz (2a) ein erster Rahmen (2b) und ein zweiter Rahmen (2c) der mit Zubehör versehen ist, angebracht sind, an dem eine erste Achse (4a) für einen ersten Schenkel (4) und auf der anderen Seite eine zweite Achse (5a) für einen zweiten Schenkel (5) installiert ist; die kreisförmige Befestigung (2a) eine 360°-Drehung der gesamten Baugruppe ermöglicht; der Träger (2) ist an einer Basis (3) mit annähernd dreieckförmigen und parallelen Seiten mit zwei Hydraulikzylindern (3a) befestigt, die in vertikalen Achsen (6a und 7a) gelagert sind; die Hydraulikzylinder (3a) öffnen und schließen den dritten und vierten Schenkel (6 und 7) mit Messern (8 und 9).

14. Bagger oder Forstmaschine mit Schneidkopf nach einem der Ansprüche 1 bis 11 oder der Anordnung nach Anspruch 12 oder 13.

## Revendications

1. Tête de coupe pour une excavatrice ou une machine forestière pour couper des arbres et/ou des arbustes, la tête ayant deux lames, qui sont montées dans les parties inférieures de bras de préhension et de coupe, les arêtes de coupe des lames étant en forme de coin ; **caractérisée en ce que** lesdites arêtes de coupe des lames sont situées sur un même plan, de sorte que lors d'un mouvement de coupe, l'arbre et/ou l'arbuste est coupé dans un plan ; et **en ce que** les deux lames sont symétriques et présentent sur au moins un côté de l'arête en forme de coin un certain nombre de rainures de certaine forme géométrique.

2. Tête de coupe selon la revendication 1, **caractérisée en ce que** les rainures sont situées des deux côtés des arêtes de coupe en forme de coin des lames, qui sont disposées de préférence de telle sorte que les rainures sur le côté inférieur sont situées entre les rainures sur le côté supérieur d'une certaine lame.

3. Tête de coupe selon l'une quelconque des revendications précédentes, **caractérisée en ce que** le côté supérieur de chaque lame présente de préférence 10 à 30 rainures, tandis que le côté inférieur présente de préférence de 9 à 31 rainures.

4. Tête de coupe selon l'une quelconque des revendications précédentes, **caractérisée en ce que** le côté supérieur de chaque lame présente de préférence un nombre pair de rainures, tandis que le côté inférieur de chaque lame présente de préférence un nombre impair de rainures.

5. Tête de coupe selon l'une quelconque des revendications précédentes, **caractérisée en ce que** les rainures sont en demi-cercle.

6. Tête de coupe selon l'une quelconque des revendications précédentes, **caractérisée en ce que** l'arête de chaque lame présente deux parties, la première partie étant plus pointue que la deuxième partie, qui continue ensuite dans la partie uniformément épaisse avec lesdites rainures.

7. Tête de coupe selon la revendication 6, **caractérisée en ce que** la première partie présente un angle de 50° à 70°, de préférence de 60°, et la deuxième partie présente un angle de 20° à 40°, de préférence 30°.

8. Tête de coupe selon l'une quelconque des revendications précédentes, **caractérisée en ce que** les lames sont en acier, de préférence en acier résistant à l'usure, en particulier en acier ayant une dureté nominale de 60 HRC (Rockwell) et une dureté typique de 650 à 700 HBW.

9. Tête de coupe selon l'une quelconque des revendications précédentes, **caractérisée en ce que** les lames sont en demi-cercle, l'arc ayant des trous ovales pour le montage et le réglage des lames sur les bras de coupe de la tête de coupe.

10. Tête de coupe selon la revendication 9, **caractérisée en ce que** la lame (8) est en forme de demi-cercle avec deux évidements en demi-cercle (8b et 8c) ; à partir d'une arête (8a) de la lame (8) sept trous ovales (8d) sont disposés le long de la circonférence extérieure ; entre le premier évidement (8b) et la transition vers le deuxième évidement (8c) se trouve un deuxième trou ovale (8d'), ayant la même forme que les premiers trous (8d) ; entre l'autre arête de la lame et l'arête (8a) sont prévus des troisièmes trous ovales (8e) et des quatrièmes trous ovales (8f) plus grands, qui alternent le long du rayon du demi-cercle ; les trous ovales sont destinés à monter la lame (8) sur un troisième bras (6) ; la deuxième lame (9) est la même que la première lame (8) et est montée sur un quatrième bras (7).

11. Tête de coupe selon l'une quelconque des revendications précédentes, **caractérisée en ce que** les dimensions des lames sont arbitraires, de préférence la largeur de la lame est de 15 mm et les rainures ont de préférence une largeur de 20 mm et une profondeur de 7,5 mm.

12. Ensemble pour couper des arbres et/ou des arbustes, qui comprend la tête de coupe selon l'une quelconque des revendications précédentes et un préhenseur et/ou des pinces pour saisir un arbre et/ou un arbuste.

13. Ensemble selon la revendication 12, **caractérisé en ce qu'**il comprend un boîtier (1) pouvant être fixé, qui est par l'intermédiaire d'une première fixation de forme circulaire (1a) monté avec des vis sur une deuxième fixation circulaire (2a) d'un support (2) ; perpendiculairement à la deuxième fixation (2a) un premier cadre (2b) et un second cadre (2c) sont fixés, pourvus d'accessoires auxquels un premier essieu (4a) pour un premier bras (4) est installé et un deuxième essieu (5a) pour un deuxième bras (5) est installé de l'autre côté ; la fixation circulaire (2a) permet la rotation à 360° de l'ensemble ; le support (2) est fixé à une base (3) avec des côtés approximativement triangulaires et parallèles avec deux vérins hydrauliques (3a), qui sont montés dans des axes verticaux (6a et 7a) ; les vérins hydrauliques (3a) ouvrent et ferment les troisième et quatrième bras (6 et 7) avec les lames (8 et 9).

14. Excavatrice ou une machine forestière comprenant la tête de coupe selon l'une quelconque des revendications 1 à 11 ou l'ensemble selon la revendication 12 ou la revendication 13.
